# EUROPEAN PATENT SPECIFICATION

(11) **EP 3 397 016 B1**
(45) Date of publication and mention of the grant of the patent: **04.08.2021**
(21) Application number: 16903487.3
(22) Date of filing: 01.06.2016
(51) Int. Cl.: H04W 74/08, H04W 88/08

(54) **CHANNEL CONTENTION METHOD AND APPARATUS**
KANALKONFLIKTVERFAHREN UND VORRICHTUNG
PROCÉDÉ DE CONFLIT DE CANAL ET DISPOSITIF

(43) Date of publication of application: 31.10.2018
(73) Proprietor: Huawei Technologies Co., Ltd., Longgang District Shenzhen, Guangdong 518129 (CN)
(72) Inventor: ZENG, Lijun, Shenzhen Guangdong 518129 (CN); FU, Weixiang, Shenzhen Guangdong 518129 (CN); YOU, Yanzhen, Shenzhen Guangdong 518129 (CN)
(74) Representative: Epping - Hermann - Fischer
(86) International application number: PCT/CN2016/084294
(87) International publication number: WO 2017/206102

(56) References cited:
- WO-A1-2015/076938
- WO-A1-2016/053173
- WO-A1-2016/079677
- CN-A- 104 113 905
- CN-A- 105 338 652
- US-A1- 2015 071 060
- SHARP: "Intra-operator LAA frequency reuse considerations", 3GPP DRAFT; R1-153056, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20150525 - 20150529 15 May 2015 (2015-05-15), XP050968912, Retrieved from the Internet: URL:http://www.3gpp.org/ftp/tsg_ran/WG1_RL 1/TSGR1_81/Docs/ [retrieved on 2015-05-15]
- SK TELECOM: "Requirements for C-RAN with flexible function splits", 3GPP DRAFT; RPA160049_C-RAN_WITH_FLEXIBLE_FUNCTION_SPL IT_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. Barcelona, Spain; 20160128 - 20160129 27 January 2016 (2016-01-27), XP051053248, Retrieved from the Internet: URL:http://www.3gpp.org/ftp/Meetings_3GPP_ SYNC/RAN/Docs/ [retrieved on 2016-01-27]
- NGMN ALLIANCE: '5G White Paper' A DELIVERABLE BY THE NGMN ALLIANCE NGMN 5G WHITE PAPER 17 February 2015, pages 1 - 125, XP050954420

## Description

### TECHNICAL FIELD

The present invention relates to wireless communications technologies, and in particular, to a channel contention method and an apparatus.

### BACKGROUND

According to a requirement of the 3rd Generation Partnership Project (3rd Generation Partnership Project, 3GPP for short) and wireless control on an unlicensed (Unlicense) frequency band communications device, a licensed-assisted access (Licensed-Assisted Access) technology or a Long Term Evolution-Unlicensed (Long Term Evolution-Unlicensed, LTE-U for short) technology needs to support a listen before talk (Listen Before Talk, LBT for short) function. The LBT function specifically means that a device can use a channel only after ensuring that the channel is not occupied by another device and then obtaining the channel by means of contention.

In the prior art, when a baseband processing unit (Building Baseband Unit, BBU for short) has data to send, the BBU allocates a channel to a remote radio unit (Remote Radio Unit, RRU for short).

Currently, to implement LBT in an RRU-BBU distributed architecture, a novel channel contention method needs to be considered for a relatively high requirement on real-time performance of channel contention.

Document SHARP: "Intra-operator LAA frequency reuse considerations", 3GPP DRAFT; R1-153056, 3RD GENERATION PARTNERSHIP PROJECT (3GPP), MOBILE COMPETENCE CENTR; 650, ROUTE DES LUCIOLES; F-06921 SOPHIA-ANTIPOLIS CEDEX; FRANCE, vol. RAN WG1, no. Fukuoka, Japan; 20150525 - 20150529, considers frequency reuse of LAA cells under the same scheduler/operator for the backoff counter coordination and handling. With knowledge of CCA detection result and backoff counter of each LAA cell, the eNB can coordinate the backoff counter to allow simultaneous LAA transmissions, and to avoid undesirable LAA transmission collision. It is proposed that the backoff counter should be maintained independently at each LAA cell with corrdinated counter handling by the scheduler; that if a LAA cell obtains the channel, simultaneous transmission can be enabled by setting the backoff counter to zero on another LAA cell if it senses the channel as idle in the last CCA slot: and that if multiple LAA cells obtain the channel in the same CCA slot, the eNB may defer the transmission of some of these LAA cells by starting ne backoff processes to avoid collision of undesirable simultaneous LAA transmissions.

### SUMMARY

The reader is referred to the appended independent claims. Some preferred features are laid out in the dependent claims.

A channel contention method and an apparatus are provided, to implement LBT in an RRU-BBU distributed architecture.

A first aspect presented as an example useful for understanding the present invention provides a channel contention method, including:
contending, by an RRU, for a target channel; and
sending, by the RRU, carrier status information to a BBU, where the carrier status information is used to indicate a channel contention result of the RRU.

The contending, by an RRU, for a target channel includes:
determining, by the RRU, that the target channel is in an idle state; and
obtaining, by the RRU, a CCA time period, and starting a countdown of the CCA time period.

Optionally, before the determining that the target channel is in an idle state, the method further includes:
starting, by the RRU, LBT detection.

Further, if the RRU obtains the target channel by means of contention, the method further includes:
enabling, by the RRU, a transmit channel at a same moment with another RRU that obtains the target channel by means of contention.

The method further includes:
sending, by the RRU, a channel contention parameter to an RHUB, where the channel contention parameter includes CCA time period remaining time or a channel duty cycle; and
receiving, by the RRU, cooperation indication information sent by the RHUB according to the channel contention parameter, where the cooperation indication information is used to indicate a start moment of a channel contention time period of the RRU, and the start moment and duration of the channel contention time period of the RRU are the same as those of at least one other RRU in a management range of the RHUB

Optionally, the enabling, by the RRU, a transmit channel at a same moment with another RRU that obtains the target channel by means of contention includes:
enabling, by the RRU, the transmit channel at an end moment of the channel contention time period with the another RRU that obtains the target channel by means of contention.

After the obtaining, by the RRU, a CCA time period, and starting a countdown of the CCA time period, the method further includes:
after the CCA time period counts down to zero, starting, by the RRU, a countdown of the channel contention time period at the start moment of the channel contention time period according to the cooperation indication information.

Optionally, the RRU broadcasts occupation notification information after successfully obtaining the target channel by means of contention, where the occupation notification information is used to indicate that the RRU successfully occupies the target channel.

The notification information is WiFi device identifiable information.

Optionally, the carrier status information is a transmit channel enabled/disabled state identifier, and the transmit channel enabled/disabled state identifier is used to indicate whether the transmit channel of the RRU is enabled.

Optionally, the sending, by the RRU, carrier status information to a BBU includes:
sending, by the RRU to the BBU, a common public radio interface CPRI control word that carries the carrier status information.

Optionally, the sending, by the RRU, carrier status information to a BBU includes:
sending, by the RRU, the carrier status information to the BBU by carrying the carrier status information in at least one bit in a data transmission part of a data channel.

Optionally, the sending, by the RRU, the carrier status information to the BBU by carrying the carrier status information in at least one bit in a data transmission part of a data channel includes:
sending, by the RRU, the carrier status information to the BBU by carrying the carrier status information in at least two consecutive bits in an IQ data transmission part of the data channel.

Optionally, the sending, by the RRU, the carrier status information to the BBU by carrying the carrier status information in at least one bit in an IQ data transmission part of a data channel includes:
sending, by the RRU, the carrier status information to the BBU by carrying the carrier status information in at least one preset bit in the IQ data transmission part of the data channel.

Optionally, the sending, by the RRU, carrier status information to a BBU includes:
sending, by the RRU, the carrier status information to the BBU by carrying the carrier status information in a dedicated data channel.

Further, the method further includes:
receiving, by the RRU, allocation information sent by the BBU, where the allocation information is used to allocate the dedicated data channel to the RRU.

A second aspect presented as an example useful for understanding the present invention provides a channel contention method, including:
receiving, by a BBU, carrier status information sent by at least one remote radio unit RRU, where the carrier status information is used to indicate a channel contention result of the RRU; and
sending, by the BBU according to the carrier status information sent by the at least one RRU, data to an RRU that successfully obtains a channel by means of contention and that is of the at least one RRU.

The method further includes:
sending, by the BBU, a channel contention stop indication to the at least one RRU, to instruct the at least one RRU to stop contending for the channel.

A third aspect presented as an example useful for understanding the present invention provides a channel contention method, including: receiving, by an RHUB, a channel contention parameter sent by at least one remote radio unit RRU;
determining, by the RHUB, a start moment of a channel contention time period of the at least one RRU according to the channel contention parameter sent by the at least one RRU, where the start moment of the channel contention time period of the at least one RRU is the same; and
separately sending, by the RHUB, cooperation indication information to the at least one RRU, where the cooperation indication information is used to indicate the start moment of the channel contention time period of the RRU.

A fourth aspect presented as an example useful for understanding the present invention provides a channel contention method, including:
occupying, by an RRU, a target channel; and
broadcasting, by the RRU, occupation notification information, where the occupation notification information is used to indicate that the RRU successfully occupies the target channel.

Optionally, the occupation notification information is WiFi device identifiable information. A fifth aspect presented as an example useful for understanding the present invention provides a remote radio unit, including:
a processor, configured to contend for a target channel; and
a transmitter, configured to send carrier status information to a baseband control unit BBU, where the carrier status information is used to indicate a channel contention result of the remote radio unit RRU.

Optionally, the processor is specifically configured to: determine that the target channel is in an idle state; and obtain a clear channel assessment CCA time period and start a countdown of the CCA time period.

Optionally, the processor is further configured to start listen before talk LBT detection before determining that the target channel is in the idle state.

The processor is further configured to: when the RRU obtains the target channel by means of contention, enable a transmit channel at a same moment with another RRU that obtains the target channel by means of contention.

Optionally, the remote radio unit further includes a receiver;
the transmitter is further configured to send a channel contention parameter to a remote radio unit hub RHUB, where the channel contention parameter includes CCA time period remaining time or a channel duty cycle; and
the receiver is configured to receive cooperation indication information sent by the RHUB according to the channel contention parameter, where the cooperation indication information is used to indicate a start moment of a channel contention time period of the RRU, and the start moment and duration of the channel contention time period of the RRU are the same as those of at least one other RRU in a management range of the RHUB

Optionally, the processor is specifically configured to enable the transmit channel at an end moment of the channel contention time period with the another RRU that obtains the target channel by means of contention.

Optionally, the processor is further configured to: after obtaining the CCA time period and starting the countdown of the CCA time period, and after the CCA time period counts down to zero, start a countdown of the channel contention time period at the start moment of the channel contention time period according to the cooperation indication information.

Optionally, the transmitter is further configured to broadcast occupation notification information after the processor successfully obtains the target channel by means of contention, where the occupation notification information is used to indicate that the RRU successfully occupies the target channel.

The occupation notification information is wireless fidelity WiFi device identifiable information.

A sixth aspect presented as an example useful for understanding the present invention provides a baseband control unit, including:
a receiver, configured to receive carrier status information sent by at least one remote radio unit RRU, where the carrier status information is used to indicate a channel contention result of the RRU; and
a transmitter, configured to send, according to the carrier status information sent by the at least one RRU, data to an RRU that successfully obtains a channel by means of contention and that is of the at least one RRU.

Optionally, the transmitter is further configured to send a channel contention stop indication to the at least one RRU, to instruct the at least one RRU to stop contending for the channel.

A seventh aspect presented as an example useful for understanding the present invention provides a remote radio unit hub, including:
a receiver, configured to receive a channel contention parameter sent by at least one remote radio unit RRU;
a processor, configured to determine a start moment of a channel contention time period of the at least one RRU according to the channel contention parameter sent by the at least one RRU, where the start moment of the channel contention time period of the at least one RRU is the same; and
a transmitter, configured to separately send cooperation indication information to the at least one RRU, where the cooperation indication information is used to indicate the start moment of the channel contention time period of the RRU.

An eighth aspect presented as an example useful for understanding the present invention provides a remote radio unit, including:
a processor, configured to occupy a target channel; and
a transmitter, configured to broadcast occupation notification information, where the occupation notification information is used to indicate that the remote radio unit RRU successfully occupies the target channel.

Optionally, the occupation notification information is WiFi device identifiable information.

A ninth aspect presented as an example useful for understanding the present invention provides a channel contention system, including a BBU, an RHUB, and at least one RRU, where
the RRU is configured to contend for a target channel and send carrier status information to the BBU, where the carrier status information is used to indicate a channel contention result of the RRU; and
the BBU is configured to: receive the carrier status information sent by the at least one RRU, and send, according to the carrier status information sent by the at least one RRU, data to an RRU that successfully obtains a channel by means of contention and that is of the at least one RRU.

Optionally, the RRU is further configured to send a channel contention parameter to the RHUB, where the channel contention parameter includes CCA time period remaining time or a channel duty cycle; and
the RHUB is configured to: determine a start moment of a channel contention time period of the at least one RRU according to the channel contention parameter sent by the at least one RRU, where the start moment of the channel contention time period of the at least one RRU is the same; and send cooperation indication information to the at least one RRU, where the cooperation indication information is used to indicate the start moment of the channel contention time period of the RRU.

Optionally, all multiple RRUs that obtain the target channel by means of contention and that are of the at least one RRU enable a transmit channel at a same moment.

Optionally, all the multiple RRUs that obtain the target channel by means of contention and that are of the at least one RRU enable the transmit channel at an end moment of the channel contention time period.

According to the channel contention method and the apparatus provided in the embodiments of the present invention, an RRU contends for a channel and can occupy the channel after the contention is successful, and then notifies a BBU of a result of the contention by using carrier status information, thereby meeting a requirement on real-time performance of channel contention in a distributed scenario.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic diagram of an application scenario of a channel contention method according to an embodiment of the present invention;
FIG. 2 is a schematic flowchart of Embodiment 1 of a channel contention method according to an embodiment of the present invention;
FIG. 3 is a schematic diagram of a channel contention time period in a channel contention method according to an embodiment of the present invention;
FIG. 4 is a schematic diagram of another channel contention time period in a channel contention method according to an embodiment of the present invention;
FIG. 5A and FIG. 5B are a schematic flowchart of Embodiment 2 of a channel contention method according to an embodiment of the present invention;
FIG. 6 is a schematic diagram of another channel contention time period in a channel contention method according to an embodiment of the present invention;
FIG. 7 is a schematic structural diagram of Embodiment 1 of a remote radio unit according to the present invention;
FIG. 8 is a schematic structural diagram of Embodiment 1 of a baseband control unit according to the present invention;
FIG. 9 is a schematic structural diagram of Embodiment 1 of a remote radio unit hub according to the present invention;
FIG. 10 is a schematic structural diagram of Embodiment 2 of a remote radio unit according to the present invention;
FIG. 11 is a schematic structural diagram of Embodiment 3 of a remote radio unit according to the present invention;
FIG. 12 is a schematic structural diagram of Embodiment 4 of a remote radio unit according to the present invention;
FIG. 13 is a schematic structural diagram of Embodiment 2 of a baseband control unit according to the present invention; and
FIG. 14 is a schematic structural diagram of Embodiment 2 of a remote radio unit hub according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention.

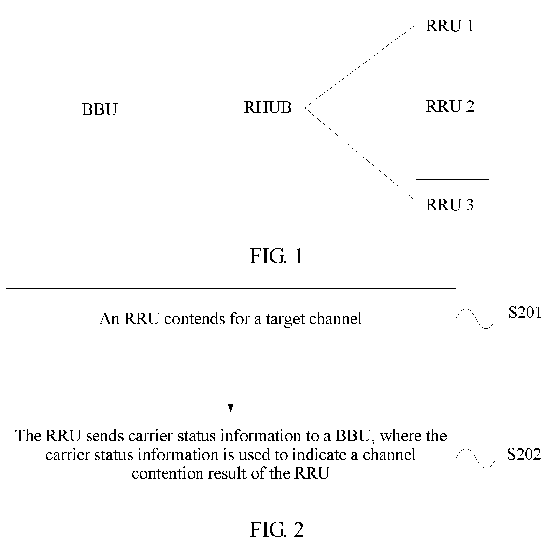

FIG. 1 is a schematic diagram of an application scenario of a channel contention method according to an embodiment of the present invention. This embodiment of the present invention may be applied to a distributed RRU-BBU scenario, but is not limited thereto. As shown in FIG. 1, the scenario architecture may include a BBU, an RRU hub (RHUB), and at least one RRU.

The RRU may be a component of a distributed base station. In the foregoing architecture, the RRU may be a pico-RRU (pico-RRU).

Specifically, when the at least one RRU is multiple RRUs, there may be an independent radio frequency between the RRUs, or radio frequency combination may be performed in the RHUB. This is not limited herein.

This embodiment of the present invention provides a channel contention method for a high requirement on real-time performance of channel contention, to meet LBT in an RRU-BBU distributed architecture.

The RRU contends for a target channel and sends carrier status information to the BBU, where the carrier status information is used to indicate a channel contention result of the RRU; and the BBU receives the carrier status information sent by the at least one RRU and sends, according to the carrier status information sent by the at least one RRU, data to an RRU that successfully obtains a channel by means of contention and that is of the at least one RRU.

Further, to ensure that the multiple RRUs do not interfere with each other when transmitting the data in a radio frequency combination scenario, all the multiple RRUs that obtain the target channel by means of contention enable a transmit channel at a same moment.

Optionally, the RRU is further configured to send a channel contention parameter to the RHUB, where the channel contention parameter includes CCA time period remaining time or a channel duty cycle.

The RHUB is configured to: determine a start moment of a channel contention time period of the at least one RRU according to the channel contention parameter sent by the at least one RRU, where the start moment of the channel contention time period of the at least one RRU is the same; and send cooperation indication information to the at least one RRU, where the cooperation indication information is used to indicate the start moment of the channel contention time period of the RRU.

That all the multiple RRUs that obtain the target channel by means of contention enable a transmit channel at a same moment may be that all the multiple RRUs that obtain the target channel by means of contention enable the transmit channel at an end moment of the foregoing channel contention time period.

It may be understood that a scenario with an RHUB network element is a more optimized solution for implementing the present invention. When there is no RHUB in the system (scenario), the solution can also be implemented. The RHUB may be used for cooperation between the multiple RRUs, so that mutual interference is reduced when the multiple RRUs that obtain the target channel by means of contention transmit the data.

For a specific implementation method, refer to the following method embodiments, and details are not described herein.

FIG. 2 is a schematic flowchart of Embodiment 1 of a channel contention method according to an embodiment of the present invention. As shown in FIG. 2, the method includes the following steps.

S201. An RRU contends for a target channel.

It should be noted that the RRU may be a unique RRU in a scenario architecture, or may be any one of at least one RRU.

S202. The RRU sends carrier status information to a BBU, where the carrier status information is used to indicate a channel contention result of the RRU.

A requirement on real-time performance of channel contention is relatively high, and usually 20 µs is required. However, LBT requires that a device can use a channel only after ensuring that the channel is not occupied by another device and then obtaining the channel by means of contention. If the BBU contends for the channel, in a distributed scenario, distances between RRUs and between the RRU and the BBU are relatively long, and a delay is relatively long when the BBU notifies the RRU and then the RRU occupies the channel. Consequently, the requirement on real-time performance of channel contention may not be met.

In this embodiment of the present invention, the RRU contends for the channel and can occupy the channel after the contention is successful, and then notifies the BBU of a result of the contention by using the carrier status information, thereby meeting the requirement on real-time performance of channel contention in the distributed scenario.

Optionally, that the RRU contends for the target channel may be specifically: the RRU determines that the target channel is in an idle state; and then the RRU obtains a clear channel assessment (clear channel assessment, CCA for short) time period and starts a countdown of the CCA time period.

It should be noted that the RRU continuously detects a busy/idle state of the target channel. When the RRU determines that the target channel is in the idle state, it indicates that the target channel can be occupied. In this case, the RRU generates a random waiting number. When the random waiting number counts down to zero, the RRU successfully occupies the target channel and transmits data, that is, channel contention is successful. The random waiting number may be the CCA time period obtained by using a CCA algorithm, but is not limited thereto.

Before the RRU determines that the target channel is in the idle state, the RRU starts an LBT detection function. The RRU can continuously detect the busy/idle state of the target channel after starting LBT detection.

Specifically, the RRU may start the LBT detection. In this manner, generally, the RRU continuously keeps the LBT detection in a started state. The RRU stops the LBT detection after successfully obtaining the target channel by means of contention, and restarts the LBT detection when duration of occupying the target channel reaches a preset occupation threshold. However, the present invention is not limited thereto.

Alternatively, the BBU may send an LBT detection start indication to the RRU when there is a data transmission requirement. This is not limited herein.

Optionally, the carrier status information may be a transmit channel enabled/disabled state identifier, and the transmit channel enabled/disabled state identifier is used to indicate whether a transmit channel of the RRU is enabled.

It should be noted that, if successfully occupying the target channel, the RRU enables the transmit channel to transmit the data. The BBU can determine, by using the transmit channel enabled/disabled state identifier, whether the RRU successfully occupies the target channel. That is, if the transmit channel of the RRU is in an enabled state, it indicates that the channel contention is successful, and the RRU enables a power amplification baseband to send the data to an air interface; or if the transmit channel of the RRU is in a disabled state, it indicates that the channel contention fails. Specifically, the transmit channel enabled/disabled state identifier may be carried in a preset location in the information. For example, "1" identifies that the transmit channel is in the enabled state, and "0" identifies that the transmit channel is in the disabled state.

Certainly, the foregoing embodiment is not construed as a limitation. The RRU may further notify the channel contention result by using another identifier, such as an identifier of whether the channel is occupied. This is not limited herein.

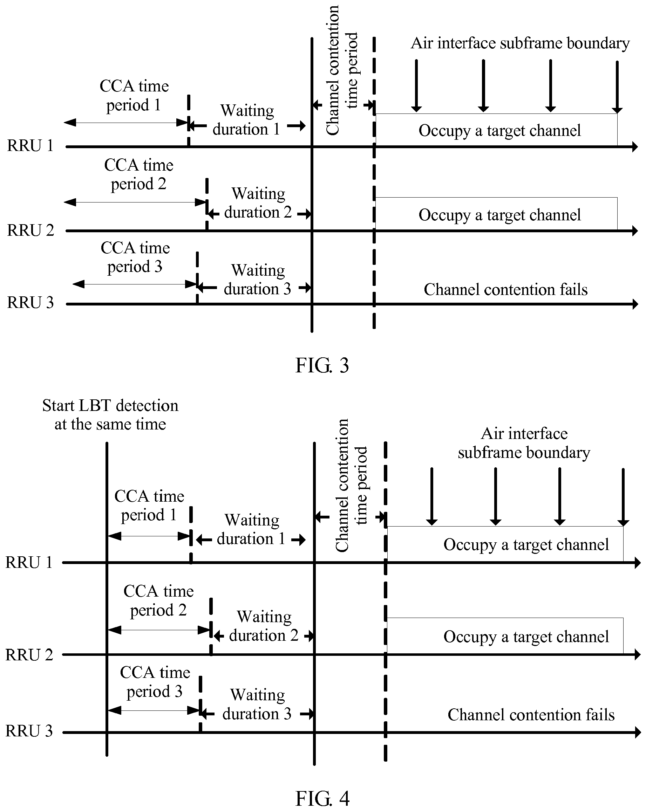

FIG. 3 is a schematic diagram of a channel contention time period in a channel contention method according to an embodiment of the present invention.

Referring to FIG. 1, when there are multiple RRUs in a system architecture, and when the multiple RRUs perform radio frequency combination, that is, two or more RRUs may obtain a target channel by means of contention at the same time, interference between the RRUs that obtain the target channel by means of contention needs to be considered.

It is assumed that an RRU 1 detects that the target channel is idle and the RRU 1 generates a CCA time period 1, and an RRU 2 also detects that the target channel is idle and the RRU 2 generates a CCA time period 2, but the CCA time period 1 and the CCA time period 2 may not be equal. It is assumed that the CCA time period 1 is shorter than the CCA time period 2. If the RRU 1 directly occupies, after the CCA time period 1 counts down to zero, the target channel to transmit data, and the RRU 2 also directly occupies, after the CCA time period 2 counts down to zero, the target channel to transmit data, a moment at which the RRU 2 transmits the data in the target channel is later than a moment at which the RRU 1 transmits the data in the target channel. If the data of the RRU 1 is not completely transmitted at the moment at which the RRU 2 enters the target channel to transmit the data, collision is caused to the data transmitted by the RRU 1, and the data transmitted by the RRU 1 near the moment at which the RRU 2 enters the target channel to transmit the data may not be correctly parsed by a receiving party, thereby affecting accuracy of data transmission.

In this embodiment, if the RRU obtains the target channel by means of contention, the RRU enables a transmit channel at a same moment with another RRU that obtains the target channel by means of contention, that is, starts transmitting the data at the same time.

Specifically, an RHUB may uniformly coordinate time for the multiple RRUs to enable the transmit channel, for example, the RHUB may notify, to the multiple RRUs in a management range of the RHUB, a moment for enabling the transmit channel.

In a specific implementation process, that the RRU starts transmitting the data at the same moment with the another RRU that obtains the target channel by means of contention may be understood that the RRU starts transmission at the same moment with the another RRU that obtains the target channel by means of contention, or may be understood that the RRU starts transmission in a preset time range with the another RRU that obtains the target channel by means of contention. Generally, the preset time range is relatively short, and mutual interference is not caused.

In an optional implementation, the RRU sends a channel contention parameter to the RHUB, where the contention parameter may include CCA time period remaining time or a channel duty cycle. The RHUB may calculate a start moment of a channel contention time period of the RRUs according to channel contention parameters reported by the multiple RRUs in the management range of the RHUB. Further, the RHUB sends cooperation indication information to the multiple RRUs in the management range of the RHUB, where the cooperation indication information is used to indicate the start moment of the channel contention time period of the RRU.

Referring to FIG. 3, it is assumed that there are three RRUs in the management range of the RHUB. All the RRUs contend for the target channel and separately generate random numbers "CCA time period" after detecting that the target channel is idle. The RRU reports the channel contention parameter to the RHUB in real time. The RHUB calculates the start moment of the channel contention time period according to the channel contention parameters separately reported by the three RRUs. The start moment and duration of the channel contention time period of at least one RRU in the management range of the RHUB are as those of another RRU.

The channel contention time period may also be a relatively short CCA time period obtained by using a CCA algorithm.

The duration of the channel contention time period of the at least one RRU in the management range of the RHUB is also the same, so as to ensure that the at least one RRU in the management range of the RHUB starts transmitting the data at the same time. Optionally, the duration of the channel contention time period may be a value preconfigured for each RRU or may be a fixed value, or may be indicated by the RHUB in the cooperation indication information. This is not limited herein.

After the RRU receives the cooperation indication information, when the CCA time period counts down to zero, the RRU does not immediately occupy the target channel to transmit the data, but waits for a period of time according to the start moment of the channel contention time period and starts a countdown of the channel contention time period at the start moment of the channel contention time period.

Each RRU continuously detects a busy/idle state of the target channel in the channel contention time period. If the target channel is still idle, the target channel may be occupied at an end moment of the channel contention time period. If it is detected that the target channel is busy, channel contention fails.

That is, after the CCA time period counts down to zero, the RRU further needs to start the countdown of the channel contention time period at the start moment of the channel contention time period according to the cooperation indication information. As shown in FIG. 3, after the CCA time period counts down to zero, the RRU experiences waiting duration and starts the countdown of the channel contention time period with another RRU. If the target channel is not occupied in the channel contention time period, the RRU successfully occupies the target channel when the channel contention time period counts down to zero and transmits the data.

It should be noted that the RRU determines the busy/idle state of the target channel mainly by detecting an energy value of the target channel. When the energy value of the target channel is greater than a determining threshold, it is considered that the target channel is occupied; or when the energy value of the target channel is less than the determining threshold, it is considered that the target channel is idle. In a distributed BBU-RRU scenario, the RRUs are distributed in different locations and interference from another nearby device is also different. Therefore, detection results of the busy/idle state of the target channel are also different. As shown in FIG. 3, an RRU 3 may detect that the target channel is occupied, and contention fails. The RRU 1 and the RRU 2 obtain the target channel by means of contention at the same time and may start data transmission at the same time.

Based on the foregoing embodiment, that the RRU enables the transmit channel at the same moment with the another RRU that obtains the target channel by means of contention may be that the RRU enables the transmit channel at the end moment of the channel contention time period with the another RRU that obtains the target channel by means of contention. Because the start moment and the duration of the channel contention time period of the at least one RRU in the management range of the RHUB are the same, the RRU enables the transmit channel at the end moment of the channel contention time period with the another RRU that obtains the target channel by means of contention, so as to ensure that the RRU starts transmitting the data at the same moment with the another RRU that obtains the target channel by means of contention and avoid mutual interference.

FIG. 4 is a schematic diagram of another channel contention time period in a channel contention method according to an embodiment of the present invention.

Optionally, as shown in FIG. 4, based on FIG. 3, the RHUB may further instruct the multiple RRUs in the management range to start LBT detection at the same time, so as to better ensure synchronization of channel contention of the multiple RRUs. However, the present invention is not limited thereto.

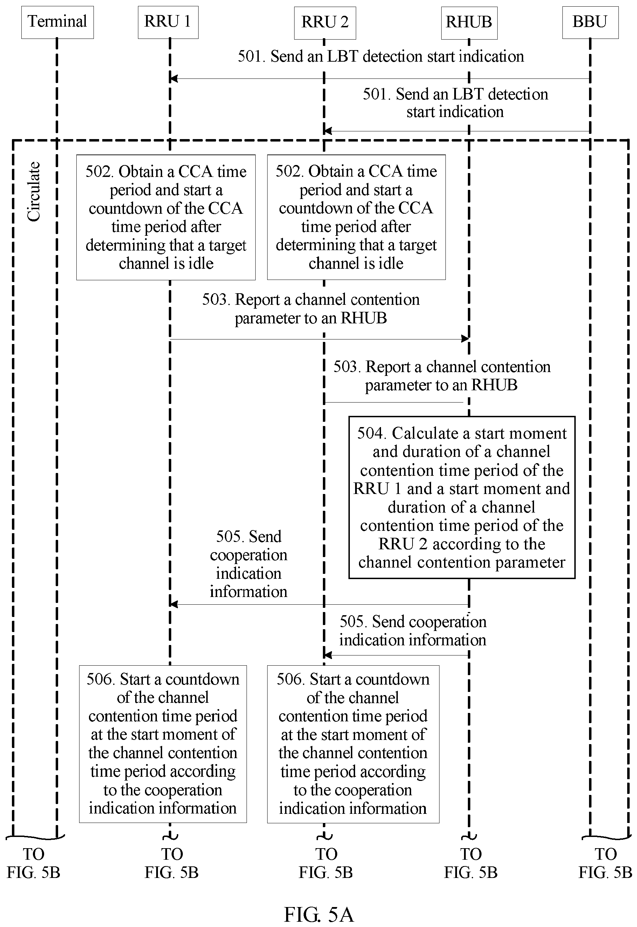

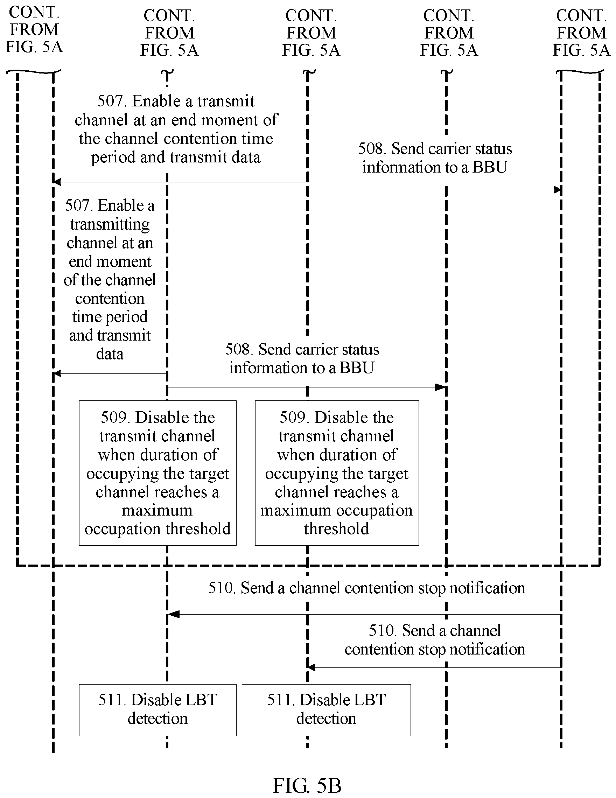

FIG. 5A and FIG. 5B are a schematic flowchart of Embodiment 2 of a channel contention method according to an embodiment of the present invention. As shown in FIG. 5A and FIG. 5B, an example in which a management range of an RHUB includes an RRU 1 and an RRU 2 is used, and the method includes the following steps.

S501. A BBU separately sends an LBT detection start indication to the RRU 1 and the RRU 2.

Certainly, S501 is an optional step, and each RRU may actively start LBT detection. This is not limited herein.

S502. The RRU 1 and the RRU 2 separately obtain a CCA time period and start a countdown of the CCA time period after determining that a target channel is idle.

S503. The RRU 1 and the RRU 2 separately report a channel contention parameter to the RHUB, where the channel contention parameter includes CCA time period remaining time or a channel duty cycle.

S503 may be performed concurrently with S502, or S503 may be repeatedly performed in a process of S502.

S504. The RHUB calculates a start moment and duration of a channel contention time period of the RRU 1 and a start moment and duration of a channel contention time period of the RRU 2 according to the channel contention parameter.

S505. The RHUB separately sends cooperation indication information to the RRU 1 and the RRU 2, where the cooperation indication information is used to indicate the start moment of the channel contention time period of the RRU 1 and the start moment of the channel contention time period of the RRU 2.

The start moment and the duration of the channel contention time period of the RRU 1 are the same as those of the RRU 2.

S506. The RRU 1 and the RRU 2 start a countdown of the channel contention time period at the start moment of the channel contention time period according to the cooperation indication information.

Assuming that both the RRU 1 and the RRU 2 successfully obtain the target channel by means of contention, the RRU 1 and the RRU 2 can enable a transmit channel at a same moment to transmit data.

S507. The RRU 1 and the RRU 2 enable a transmit channel at an end moment of the channel contention time period and transmit data.

An RRU may transmit the data to a terminal, the data may come from the BBU, and the BBU transmits to-be-transmitted data to the RRU.

S508. The RRU 1 and the RRU 2 send carrier status information to the BBU, where the carrier status information is used to indicate a channel contention result of an RRU.

If channel contention of an RRU fails, the BBU retransmits the data after learning, by using the carrier status information, that the channel contention of the RRU fails, so that the RRU transmits the data after the channel contention is successful next time.

S509. The RRU 1 and the RRU 2 disable the transmit channel when duration of occupying the target channel reaches a maximum occupation threshold, that is, stop data transmission.

The maximum occupation threshold is generally preset.

Optionally, the RRU 1 and the RRU 2 separately resend the carrier status information to the BBU to notify the BBU that the transmit channel is disabled.

S502 to S509 may be cyclically performed until data that needs to be transmitted is completely transmitted.

If the BBU does not have data that needs to be transmitted, the BBU stops transmitting data to the RRU.

Optionally, the BBU may perform S510 and S511.

S510. The BBU sends a channel contention stop notification to the RRU 1 and the RRU 2, to instruct the RRU 1 and the RRU 2 to stop the channel contention.

S511. The RRU 1 and the RRU 2 disable LBT detection.

The terminal in this embodiment of the present invention may be a wireless terminal or may be a wired terminal. The wireless terminal may be a device that provides a user with connectivity of voice and/or other service data, a handheld device with a wireless connection function, or another processing device connected to a wireless modem. The wireless terminal may communicate with one or more core networks by using a radio access network (Radio Access Network, RAN for short). The wireless terminal may be a mobile terminal such as a mobile phone (or referred to as a "cellular" phone) or a computer with a mobile terminal, for example, may be a portable, pocket-sized, handheld, computer built-in, or in-vehicle mobile apparatus, which exchanges voice and/or data with the radio access network. For example, the wireless terminal may be a device such as a personal communication service (Personal Communication Service, PCS for short) phone, a cordless telephone set, a Session Initiation Protocol (Session Initiation Protocol, SIP for short) phone, a wireless local loop (Wireless Local Loop, WLL for short) station, or a personal digital assistant (Personal Digital Assistant, PDA for short). The wireless terminal may also be referred to as a system, a subscriber unit (Subscriber Unit), a subscriber station (Subscriber Station), a mobile station (Mobile Station), a mobile station (Mobile), a remote station (Remote Station), a remote terminal (Remote Terminal), an access terminal (Access Terminal), a user terminal (User Terminal), a user agent (User Agent), or user equipment (User Device or User Equipment). This is not limited herein.

Optionally, the RRU may broadcast occupation notification information after the channel contention is successful, where the occupation notification information is used to indicate that the RRU successfully occupies the target channel.

In some scenarios, to prevent another device from jointly occupying the target channel with the RRU, the RRU broadcasts the occupation notification information after successfully occupying the target channel. The another device that contends for a same channel with the RRU dodges and no longer contends after receiving the occupation notification information, so as not to cause interference to the data transmitted by the RRU.

Optionally, the occupation notification information may be WiFi device identifiable information.

It should be noted that LAA/LTE-U uses a same frequency band as that of WiFi, and there may exist a conflict with a WiFi device, that is, the RRU may contend for the same channel with the WiFi device. Specifically, 802.11n specifies that an energy threshold (a busy/idle state of the target channel in a channel contention process is determined according to whether a energy of the target channel exceeds an energy threshold) of a WiFi signal is -85 dBm, and an energy threshold of a non-WiFi signal is -62 dBm. The LAA/LTE-U is a non-energy threshold signal whose energy threshold is -62 dBm. When a deployment distance between the WiFi and the LAA/LTE-U is relatively short (such as 20 m), the WiFi device does not dodge the LAA/LTE-U.

In this embodiment, by broadcasting occupation notification information identifiable to a WiFi device, the WiFi device that contends for a same target channel learns that the target channel is occupied by an RRU. Therefore, the WiFi device may actively dodge and no longer contend for the target channel, avoiding interference with the RRU.

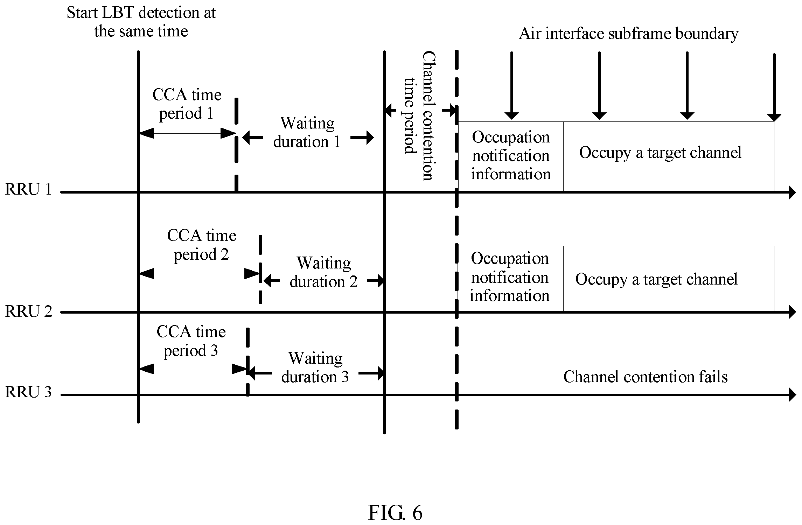

FIG. 6 is a schematic diagram of another channel contention time period in a channel contention method according to an embodiment of the present invention. As shown in FIG. 6, after successfully occupying a target channel, an RRU sends occupation notification information before transmitting data.

Further, the occupation notification information may be a WiFi packet. In the WiFi packet, a "length (Length)" field at a physical layer or a "duration (Duration)" field at a Media Access Control (Media Access Control, MAC for short) layer is used to indicate that a next channel usage opportunity is occupied by LAA/LTE-U. The length or the duration is equal to (or slightly different from) a length of this transmit opportunity (transmit opportunity, TXOP for short).

Optionally, in the WiFi packet, different values in a preset field may be used to indicate that the target channel is occupied by the RRU. For example, a preset field "1" identifies that the target channel is occupied, and "0" identifies that the target channel is not occupied. The WiFi packet may further include an identifier of the RRU, and this is not limited herein.

Optionally, the WiFi packet may be any type of packet, such as a request to send (request to send, RTS for short) packet, a clear to send (clear to send, CTS for short) packet, or a null data (NULL DATA) packet, and specifically, may be a packet that can carry network allocation vector (network allocation vector, NAV for short) information. This is not limited herein. As shown in FIG. 6, in a packet sent by each RRU, an NAV information length is the same, but an NAV information value may be discrete. This is not limited herein.

It should be noted that this embodiment may be an independent embodiment, that is, the RRU may broadcast the occupation notification information after occupying the target channel, where the occupation notification information is used to indicate that the RRU successfully occupies the target channel. This embodiment may be independent of the foregoing another embodiment, a channel contention manner of this embodiment is not limited, and an existing or another future channel contention manner may be used. For example, another device obtains a channel by means of contention and allocates the channel to the RRU, provided that the occupation notification information is broadcast after the channel is occupied.

Optionally, manners of carrying the foregoing interaction information such as an LBT detection start indication, a channel contention parameter, cooperation indication information, carrier status information, and a channel contention stop notification are similar. The carrier status information is used as an example.
(1) The carrier status information may be carried in a common public radio interface (common public radio interface, CPRI for short) control word, and optionally, may be carried in a "vendor specific (Vendor Specific)" part of the CPRI control word. Generally, the CPRI control word has multiple bits of the "vendor specific" part, and some of the multiple bits may be randomly selected to carry the carrier status information. A specific location is not limited herein.
   The foregoing interaction information such as the LBT detection start indication, the channel contention parameter, the cooperation indication information, and the channel contention stop notification may also be preset to be carried in the "vendor specific" part of the CPRI control word. A specific location is not limited herein and may be preconfigured in specific implementation.
(2) The carrier status information may also be carried in at least one bit in a data transmission part of a data channel.
   The data channel may be an antenna-carrier (antenna-carrier, AxC for short) channel. The carrier status information may also be carried in at least one bit in an in-phase and quadrature components (in-phase and quadrature components, IQ for short) data transmission part of the data channel.
   In this manner, some bits in a data carrying part of the data channel may be directly replaced with the carrier status information.
   Optionally, it may be preset that some bits are replaced, that is, the RRU sends the carrier status information to the BBU by carrying the carrier status information in at least one preset bit in the IQ data transmission part of the data channel.
   Optionally, the RRU carries the carrier status information in at least two consecutive bits in the IQ data transmission part of the data channel. It should be noted that a format of the carrier status information is fixed. For example, four bits "0001" identify that channel contention is successful, and the carrier status information may be carried in any four consecutive bits in the IQ data transmission part. A receiving party (the RRU, the BBU, or an RHUB) may perform search on the data channel according to a preset format, and a found sequence of the preset format is used as the carrier status information.
   The foregoing interaction information such as the LBT detection start indication, the channel contention parameter, the cooperation indication information, and the channel contention stop notification may also be carried in a same manner, and the carrier status information may be replaced with the foregoing interaction information such as the LBT detection start indication, the channel contention parameter, the cooperation indication information, and the channel contention stop notification. Details are not described herein.
(3) The carrier status information may also be carried in at least one bit of a dedicated data channel.

The dedicated data channel may be an AxC channel.

Optionally, in a preconfiguration process, the BBU sends allocation information to the RRU, where the allocation information is used to allocate the dedicated data channel to the RRU.

The RRU may send the carrier status information to the BBU by carrying the carrier status information in one or more bits of the dedicated data channel.

It should be noted that in the foregoing solution (2), because the BBU allocates only one data channel to the RRU at first, some bits for transmitting data are occupied for sending the carrier status information. In the solution (3), the BBU specially allocates, to the RRU, a data channel for sending the carrier status information. For example, the BBU allocates two data channels, one of which is used to carry the IQ data, and the other of which is used to transmit the carrier status information.

The foregoing interaction information such as the LBT detection start indication, the channel contention parameter, the cooperation indication information, and the channel contention stop notification may also be carried in a same manner, that is, carried in the dedicated data channel, such as the AxC channel. Details are not described herein.

The AxC channel may carry control or status information such as the carrier status information in a format shown in Table 1, where n and m are positive integers greater than or equal to 1.

**Table 1**

| **Frame header delimitation** | **After TYPE (2 bit) escape** | **After DATA (n bit) escape** | **After CRC (m bit) escape** | **Frame end delimitation** |
|---|---|---|---|---|
| 10101011 | | Transfer specific control information or status information | | /01101/001 11/ |

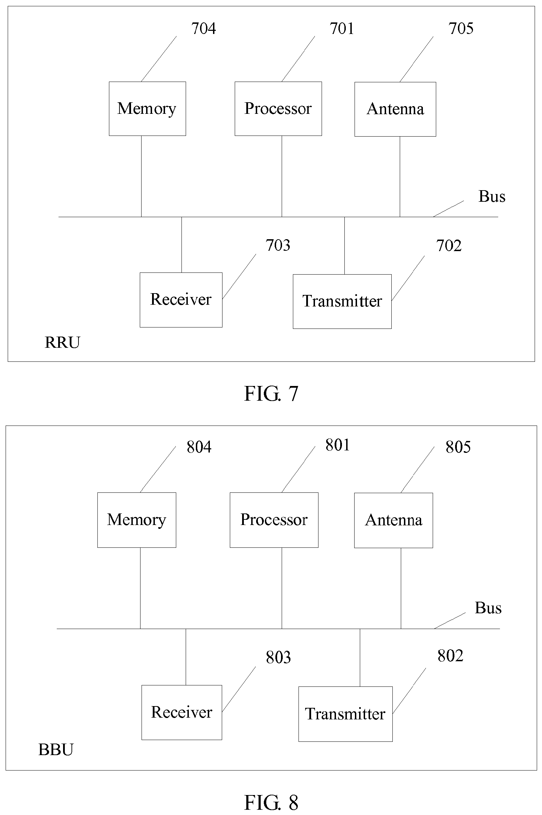

FIG. 7 is a schematic structural diagram of Embodiment 1 of a remote radio unit according to the present invention. As shown in FIG. 7, the remote radio unit includes a processor 701, a transmitter 702, a receiver 703, a memory 704, and an antenna 705.

The memory 704, the transmitter 702, the receiver 703, and the processor 701 may be connected by using a bus. Certainly, in an actual application, the memory 704, the transmitter 702, the receiver 703, and the processor 701 may not be of a bus structure, but may be of another structure, such as a star structure. This is not specifically limited in this application.

Optionally, the processor 701 may be specifically a general central processing unit or an ASIC, may be one or more integrated circuits that are configured to control program execution, may be a hardware circuit developed by using an FPGA, or may be a baseband processor.

Optionally, the processor 701 may include at least one processing core.

Optionally, the memory 704 may include one or more of a ROM, a RAM, or a magnetic disk memory. The memory 704 is configured to store data and/or an instruction required when the processor 701 runs. There may be one or more memories 704. The transmitter 702 and the receiver 703 may specifically perform sending and receiving under control of the processor 701.

The apparatus may be configured to perform any method in the foregoing method embodiments. Specifically:
The processor 701 is configured to contend for a target channel.

The transmitter 702 is configured to send carrier status information to a BBU, where the carrier status information is used to indicate a channel contention result of the remote radio unit RRU.

In this embodiment of the present invention, the RRU contends for a channel and can occupy the channel after the contention is successful, and then notifies the BBU of a result of the contention by using the carrier status information, thereby meeting a requirement on real-time performance of channel contention in a distributed scenario.

Optionally, the processor 701 is specifically configured to: determine that the target channel is in an idle state; and obtain a clear channel assessment CCA time period and start a countdown of the CCA time period.

Optionally, the processor 701 is further configured to start listen before talk LBT detection before determining that the target channel is in the idle state.

Further, the processor 701 is further configured to: when the RRU obtains the target channel by means of contention, enable a transmit channel at a same moment with another RRU that obtains the target channel by means of contention.

Optionally, the transmitter 702 is further configured to send a channel contention parameter to a remote radio unit hub RHUB, where the channel contention parameter includes CCA time period remaining time or a channel duty cycle.

The receiver 703 is configured to receive cooperation indication information sent by the RHUB according to the channel contention parameter, where the cooperation indication information is used to indicate a start moment of a channel contention time period of the RRU, and the start moment and duration of the channel contention time period of the RRU are the same as those of at least one other RRU in a management range of the RHUB.

Optionally, the processor 701 is specifically configured to enable the transmit channel at an end moment of the channel contention time period with the another RRU that obtains the target channel by means of contention.

Optionally, the processor 701 is further configured to: after obtaining the CCA time period and starting the countdown of the CCA time period, and after the CCA time period counts down to zero, start a countdown of the channel contention time period at the start moment of the channel contention time period according to the cooperation indication information.

The transmitter 702 is further configured to broadcast occupation notification information after the processor successfully obtains the target channel by means of contention, where the occupation notification information is used to indicate that the RRU successfully occupies the target channel.

Optionally, the occupation notification information is wireless fidelity WiFi device identifiable information.

The remote radio unit may be used in the method embodiments performed by the foregoing remote radio unit, and an implementation principle and technical effects are similar. For related content, refer to the method embodiments, and details are not described herein again.

The present invention further provides a remote radio unit. For a structure of the remote radio unit, refer to FIG. 7.

A processor is configured to occupy a target channel.

A transmitter is configured to broadcast occupation notification information, where the occupation notification information is used to indicate that the remote radio unit RRU successfully occupies the target channel.

In this embodiment, the occupation notification information is broadcast after the target channel is successfully occupied, to notify another device that the RRU successfully occupies the target channel. The another device may evade contention for the target channel after receiving the occupation notification information, so as not to cause interference to data transmitted by the RRU.

Optionally, the occupation notification information is WiFi device identifiable information.

The remote radio unit may be used in the method embodiments performed by the foregoing remote radio unit, and an implementation principle and technical effects are similar. For related content, refer to the method embodiments, and details are not described herein again.

FIG. 8 is a schematic structural diagram of Embodiment 1 of a baseband control unit according to the present invention. As shown in FIG. 8, the baseband control unit includes a processor 801, a transmitter 802, a receiver 803, a memory 804, and an antenna 805.

The memory 804, the transmitter 802, the receiver 803, and the processor 801 may be connected by using a bus. Certainly, in an actual application, the memory 804, the transmitter 802, the receiver 803, and the processor 801 may not be of a bus structure, but may be of another structure, such as a star structure. This is not specifically limited in this application.

Optionally, the processor 801 may be specifically a general central processing unit or an ASIC, may be one or more integrated circuits that are configured to control program execution, may be a hardware circuit developed by using an FPGA, or may be a baseband processor.

Optionally, the processor 801 may include at least one processing core.

Optionally, the memory 804 may include one or more of a ROM, a RAM, or a magnetic disk memory. The memory 804 is configured to store data and/or an instruction required when the processor 801 runs. There may be one or more memories 804. The transmitter 802 and the receiver 803 may specifically perform sending and receiving under control of the processor 801.

The apparatus may be configured to perform any method in the foregoing method embodiments. Specifically:
The receiver 803 is configured to receive carrier status information sent by at least one remote radio unit RRU, where the carrier status information is used to indicate a channel contention result of the RRU.

The transmitter 802 is configured to send, according to the carrier status information sent by the at least one RRU, data to an RRU that successfully obtains a channel by means of contention and that is of the at least one RRU.

Optionally, the transmitter 802 is further configured to send a channel contention stop indication to the at least one RRU, to instruct the at least one RRU to stop contending for the channel.

The BBU may be used in the method embodiments performed by the foregoing BBU, and an implementation principle and technical effects are similar. For related content, refer to the method embodiments, and details are not described herein again.

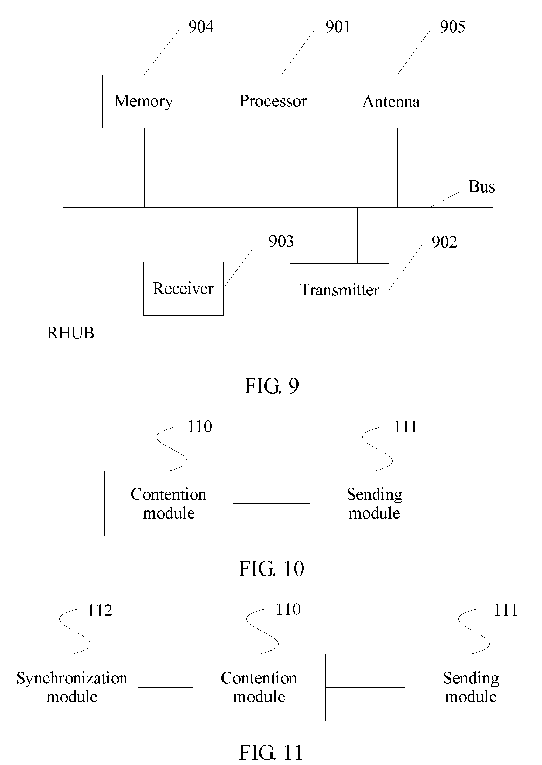

FIG. 9 is a schematic structural diagram of Embodiment 1 of a remote radio unit hub according to the present invention. As shown in FIG. 9, the baseband control unit includes a processor 901, a transmitter 902, a receiver 903, a memory 904, and an antenna 905.

The memory 904, the transmitter 902, the receiver 903, and the processor 901 may be connected by using a bus. Certainly, in an actual application, the memory 904, the transmitter 902, the receiver 903, and the processor 901 may not be of a bus structure, but may be of another structure, such as a star structure. This is not specifically limited in this application.

Optionally, the processor 901 may be specifically a general central processing unit or an ASIC, may be one or more integrated circuits that are configured to control program execution, may be a hardware circuit developed by using an FPGA, or may be a baseband processor.

Optionally, the processor 901 may include at least one processing core.

Optionally, the memory 904 may include one or more of a ROM, a RAM, or a magnetic disk memory. The memory 904 is configured to store data and/or an instruction required when the processor 901 runs. There may be one or more memories 904. The transmitter 902 and the receiver 903 may specifically perform sending and receiving under control of the processor 901.

The apparatus may be configured to perform any method in the foregoing method embodiments. Specifically:
The receiver 903 is configured to receive a channel contention parameter sent by at least one remote radio unit RRU.

The processor 901 is configured to determine a start moment of a channel contention time period of the at least one RRU according to the channel contention parameter sent by the at least one RRU, where the start moment of the channel contention time period of the at least one RRU is the same.

The transmitter 902 is configured to separately send cooperation indication information to the at least one RRU, where the cooperation indication information is used to indicate the start moment of the channel contention time period of the RRU.

The RHUB may be used in the method embodiments performed by the foregoing RHUB, and an implementation principle and technical effects are similar. For related content, refer to the method embodiments, and details are not described herein again.

FIG. 10 is a schematic structural diagram of Embodiment 2 of a remote radio unit according to the present invention. As shown in FIG. 10, the remote radio unit may include a contention module 110 and a sending module 111.

The contention module 110 is configured to contend for a target channel.

The sending module 111 is configured to send carrier status information to a baseband control unit BBU, where the carrier status information is used to indicate a channel contention result of the remote radio unit RRU.

Optionally, the contention module 110 is specifically configured to: determine that the target channel is in an idle state; and obtain a clear channel assessment CCA time period and start a countdown of the CCA time period.

Optionally, the contention module 110 is further configured to start listen before talk LBT detection before determining that the target channel is in the idle state.

FIG. 11 is a schematic structural diagram of Embodiment 3 of a remote radio unit according to the present invention. As shown in FIG. 11, based on FIG. 10, the remote radio unit may further include a synchronization module 112, configured to: when the contention module 110 obtains the target channel by means of contention, enable a transmit channel at a same moment with another RRU that obtains the target channel by means of contention.

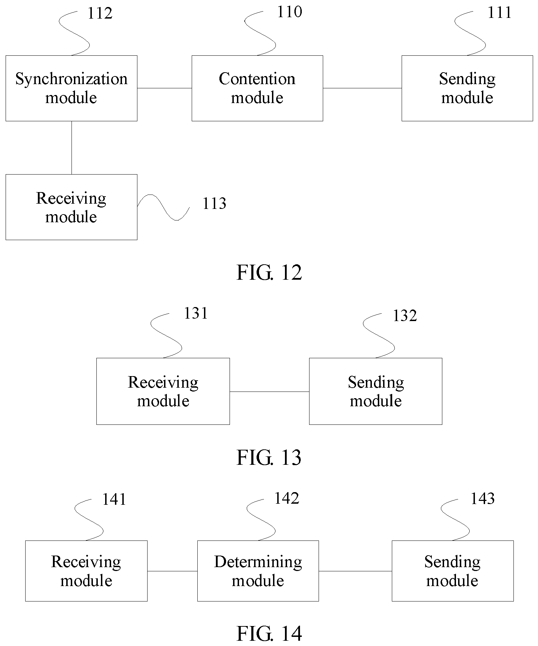

FIG. 12 is a schematic structural diagram of Embodiment 4 of a remote radio unit according to the present invention. As shown in FIG. 12, based on FIG. 11, the remote radio unit may further include a receiving module 113.

Optionally, the sending module 111 is further configured to send a channel contention parameter to a remote radio unit hub RHUB, where the channel contention parameter includes CCA time period remaining time or a channel duty cycle.

The receiving module 113 is configured to receive cooperation indication information sent by the RHUB according to the channel contention parameter, where the cooperation indication information is used to indicate a start moment of a channel contention time period of the RRU, and the start moment and duration of the channel contention time period of the RRU are the same as those of at least one other RRU in a management range of the RHUB.

Further, the synchronization module 112 is specifically configured to enable the transmit channel at an end moment of the channel contention time period with the another RRU that obtains the target channel by means of contention.

Further, the synchronization module 112 is further configured to: after the CCA time period is obtained and the countdown of the CCA time period is started, and after the CCA time period counts down to zero, start a countdown of the channel contention time period at the start moment of the channel contention time period according to the cooperation indication information.

Optionally, the sending module 111 is further configured to broadcast occupation notification information after the processor successfully obtains the target channel by means of contention, where the occupation notification information is used to indicate that the RRU successfully occupies the target channel.

The occupation notification information is wireless fidelity WiFi device identifiable information.

FIG. 13 is a schematic structural diagram of Embodiment 2 of a baseband control unit according to the present invention. As shown in FIG. 13, the baseband control unit may include a receiving module 131 and a sending module 132.

The receiving module 131 receives carrier status information sent by at least one remote radio unit RRU, where the carrier status information is used to indicate a channel contention result of the RRU.

The sending module 132 sends, according to the carrier status information sent by the at least one RRU, data to an RRU that successfully obtains a channel by means of contention and that is of the at least one RRU.

Optionally, the sending module 132 may further send a channel contention stop indication to the at least one RRU, to instruct the at least one RRU to stop contending for the channel.

The remote radio unit may be used in the method embodiments performed by the foregoing remote radio unit, and an implementation principle and technical effects are similar. For related content, refer to the method embodiments, and details are not described herein again.

FIG. 14 is a schematic structural diagram of Embodiment 2 of a remote radio unit hub according to the present invention. As shown in FIG. 14, the remote radio unit hub includes a receiving module 141, a determining module 142, and a sending module 143.

The receiving module 141 receives a channel contention parameter sent by at least one remote radio unit RRU.

The determining module 142 determines a start moment of a channel contention time period of the at least one RRU according to the channel contention parameter sent by the at least one RRU, where the start moment of the channel contention time period of the at least one RRU is the same.

The sending module 143 separately sends cooperation indication information to the at least one RRU, where the cooperation indication information is used to indicate the start moment of the channel contention time period of the RRU.

The RHUB may be used in the method embodiments performed by the foregoing RHUB, and an implementation principle and technical effects are similar. For related content, refer to the method embodiments, and details are not described herein again.

An embodiment of the present invention further provides a remote radio unit. Referring to FIG. 10, similar to a structure shown in FIG. 10, the remote radio unit includes a contention module and a sending module. The contention module is configured to occupy a target channel. The sending module is configured to broadcast occupation notification information after the target channel is occupied, where the occupation notification information is used to indicate that the RRU successfully occupies the target channel.

Optionally, the occupation notification information is WiFi device identifiable information.

In this embodiment, by broadcasting occupation notification information identifiable to a WiFi device, the WiFi device that contends for a same target channel learns that the target channel is occupied by an RRU. Therefore, the WiFi device may actively dodge and no longer contend for the target channel, avoiding interference with the RRU.

In the several embodiments provided in the present invention, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor to perform some of the steps of the methods described in the embodiments of the present invention. The foregoing storage medium includes: any medium that can store program code, such as a USB flash drive, a removable hard disk, a read-only memory (Read-Only Memory, ROM for short), a random access memory (Random Access Memory, RAM for short), a magnetic disk, or an optical disc.

## Claims

1. A channel contention method, comprising:
contending (S201), by a remote radio unit, RRU, for a target channel, wherein the contending (S201), by an RRU, for a target channel comprises:
determining, by the RRU, that the target channel is in an idle state; and
obtaining, by the RRU, a clear channel assessment, CCA, time period, and starting a countdown of the CCA time period;
sending, by the RRU, a channel contention parameter to a remote radio unit hub, RHUB, wherein the channel contention parameter comprises CCA time period remaining time or a channel duty cycle; and
receiving, by the RRU, cooperation indication information sent by the RHUB according to the channel contention parameter, wherein the cooperation indication information is used to indicate a start moment of a channel contention time period of the RRU, and the start moment and duration of the channel contention time period of the RRU are the same as those of at least one other RRU in a management range of the RHUB;
wherein if the RRU obtains the target channel by means of contention according to the cooperation indication information, the method further comprises:
enabling, by the RRU, a transmit channel at a same moment with another RRU of the at least one other RRU that obtains the target channel by means of contention; and
sending (S202), by the RRU, carrier status information to a baseband control unit BBU, wherein the carrier status information is used to indicate a channel contention result of the RRU.

2. The method according to claim 1, before the determining that the target channel is in an idle state, further comprising:
starting, by the RRU, listen before talk, LBT, detection.

3. The method according to claim 1 or 2, wherein the enabling, by the RRU, a transmit channel at a same moment with another RRU of the at least one other RRU that obtains the target channel by means of contention comprises:
enabling, by the RRU, the transmit channel at an end moment of the channel contention time period with the another RRU of the at least one other RRU that obtains the target channel by means of contention.

4. The method according to any of claims 1 to 3, after the obtaining, by the RRU, a CCA time period, and starting a countdown of the CCA time period, further comprising:
after the CCA time period counts down to zero, starting, by the RRU, a countdown of the channel contention time period at the start moment of the channel contention time period according to the cooperation indication information.

5. The method according to claim 1, after the contending (S201), by an RRU, for a target channel, further comprising:
broadcasting, by the RRU, occupation notification information after successfully obtaining the target channel by means of contention, wherein the occupation notification information is used to indicate that the RRU successfully occupies the target channel.

6. The method according to claim 5, wherein the occupation notification information is wireless fidelity WiFi device identifiable information.

7. A remote radio unit, RRU, comprising at least one processor coupled with a non-transitory storage medium storing executable instructions; wherein the executable instructions, when executed by the processor, cause the processor to execute the method of any of claims 1 to 6.

8. A computer-readable storage medium comprising instructions which, when executed by a computer, cause the computer to carry out the method of any one of claims 1 to 6.

## Patentansprüche

1. Kanalkonkurrenzverfahren, umfassend:
Konkurrieren (S201), durch eine "Remote Radio Unit", RRU, um einen Zielkanal, wobei das Konkurrieren (S201), durch eine RRU, um einen Zielkanal umfasst:
Bestimmen, durch die RRU, dass sich der Zielkanal in einem Ruhezustand befindet; und
Erhalten, durch die RRU, einer "Clear Channel Assessment"-, CCA-Zeitspanne und Starten eines Rückwärtszählvorgangs der CCA-Zeitspanne;
Senden, durch die RRU, eines Kanalkonkurrenzparameters an einen "Remote Radio Unit Hub", RHUB, wobei der Kanalkonkurrenzparameter die verbleibende Zeit der CCA-Zeitspanne oder ein Kanaltastverhältnis umfasst; und
Empfangen, durch die RRU, von Kooperationsanzeigeinformationen, die vom RHUB gemäß dem Kanalkonkurrenzparameter gesendet werden, wobei die Kooperationsanzeigeinformationen dazu verwendet werden, einen Startzeitpunkt einer Kanalkonkurrenzzeitspanne der RRU anzuzeigen, und der Startzeitpunkt und die Dauer der Kanalkonkurrenzzeitspanne der RRU die gleichen sind wie die von mindestens einer anderen RRU in einem Verwaltungsbereich des RHUB;
wobei, wenn die RRU den Zielkanal mittels Konkurrenzbetrieb gemäß den Kooperationsanzeigeinformationen erhält, das Verfahren ferner umfasst:
Freigeben, durch die RRU, eines Sendekanals zum gleichen Zeitpunkt mit einer anderen RRU der mindestens einen anderen RRU, die den Zielkanal mittels Konkurrenzbetrieb erhält; und
Senden (S202), durch die RRU, von Trägerstatusinformationen an eine "Baseband Control Unit", BBU, wobei die Trägerstatusinformationen dazu verwendet werden, ein Kanalkonkurrenzergebnis der RRU anzuzeigen.

2. Verfahren nach Anspruch 1, wobei das Verfahren vor dem Bestimmen, dass sich der Zielkanal in einem Ruhezustand befindet, ferner umfasst:
Starten, durch die RRU, von "Listen before Talk"-, LBT-Erkennung.

3. Verfahren nach Anspruch 1 oder 2, wobei das Freigeben, durch die RRU, eines Sendekanals zum gleichen Zeitpunkt mit einer anderen RRU der mindestens einen anderen RRU, die den Zielkanal mittels Konkurrenzbetrieb erhält, umfasst:
Freigeben, durch die RRU, des Sendekanals zu einem Endzeitpunkt der Kanalkonkurrenzzeitspanne mit der anderen RRU der mindestens einen anderen RRU, die den Zielkanal mittels Konkurrenzbetrieb erhält.

4. Verfahren nach einem der Ansprüche 1 bis 3, wobei das Verfahren nach dem Erhalten, durch die RRU, einer CCA-Zeitspanne und dem Starten eines Rückwärtszählvorgangs der CCA-Zeitspanne ferner umfasst:
nachdem die CCA-Zeitspanne auf null heruntergezählt ist, Starten, durch die RRU, eines Rückwärtszählvorgangs der Kanalkonkurrenzzeitspanne zum Startzeitpunkt der Kanalkonkurrenzzeitspanne gemäß den Kooperationsanzeigeinformationen.

5. Verfahren nach Anspruch 1, wobei das Verfahren nach dem Konkurrieren (S201), durch eine RRU, für einen Zielkanal ferner umfasst:
Rundsenden, durch die RRU, von Belegungsbenachrichtigungsinformationen nach dem erfolgreichen Erhalten des Zielkanals mittels Konkurrenzbetrieb, wobei die Belegungsbenachrichtigungsinformationen verwendet werden, um anzuzeigen, dass die RRU den Zielkanal erfolgreich belegt hat.

6. Verfahren nach Anspruch 5, wobei es sich bei den Belegungsbenachrichtigungsinformationen um Informationen handelt, die von einer "Wireless Fidelity"-, WiFi-Vorrichtung identifiziert werden können.

7. "Remote Radio Unit", RRU, umfassend mindestens einen Prozessor, der mit einem nichtflüchtigen Speichermedium gekoppelt ist, das ausführbare Anweisungen speichert; wobei die ausführbaren Anweisungen bei ihrer Ausführung durch den Prozessor den Prozessor veranlassen, das Verfahren nach einem der Ansprüche 1 bis 6 durchzuführen.

8. Computerlesbares Speichermedium, umfassend Anweisungen, die bei ihrer Ausführung durch einen Computer den Computer veranlassen, das Verfahren nach einem der Ansprüche 1 bis 6 durchzuführen.

## Revendications

1. Procédé de contention de canaux, comprenant :
la contention (S201), par une unité radio distante, RRU, d'un canal cible, dans lequel la contention (S201), par une RRU, d'un canal cible comprend :
la détermination, par la RRU, que le canal cible se trouve dans un état inactif ; et
l'obtention, par la RRU, d'une période de temps d'évaluation de canal libre, CCA, et le début d'un décompte de la période de temps CCA ;
l'envoi, par la RRU, d'un paramètre de contention de canal à un concentrateur d'unité radio distant, RHUB, dans lequel le paramètre de contention de canal comprend un temps restant de la période de temps CCA ou un cycle de service de canal ; et
la réception, par la RRU, des informations d'indication de coopération envoyées par le RHUB en fonction du paramètre de contention de canal, dans lequel les informations d'indication de coopération sont utilisées pour indiquer un moment de début d'une période de temps de contention de canal de la RRU, et le moment de début et la durée de la période de temps de contention de canal de la RRU sont les mêmes que ceux d'au moins une autre RRU dans une plage de gestion du RHUB ;
dans lequel si la RRU obtient le canal cible au moyen d'une contention en fonction des informations d'indication de coopération, le procédé comprend en outre :
l'activation, par la RRU, d'un canal de transmission au même moment avec une autre RRU de l'au moins une autre RRU qui obtient le canal cible au moyen de la contention ; et
l'envoi (S202), par la RRU, des informations d'état de porteuse à une unité de contrôle de bande de base BBU, dans lequel les informations d'état de porteuse sont utilisées pour indiquer un résultat de contention de canal de la RRU.

2. Procédé selon la revendication 1, avant la détermination que le canal cible se trouve dans un état inactif, comprenant en outre :
le début, par la RRU, d'une détection de « écouter avant de parler », LBT.

3. Procédé selon la revendication 1 ou 2, dans lequel l'activation, par la RRU, d'un canal de transmission à un même moment avec une autre RRU de l'au moins une autre RRU qui obtient le canal cible au moyen d'une contention comprend :
l'activation, par la RRU, du canal de transmission à un moment de fin de la période de temps de contention de canal avec l'autre RRU de l'au moins une autre RRU qui obtient le canal cible au moyen d'une contention.

4. Procédé selon l'une quelconque des revendications 1 à 3, après l'obtention, par la RRU, d'une période de temps CCA, et le début d'un décompte de la période de temps CCA, comprenant en outre :
après le décompte de la période de temps CCA à zéro, commencer, par la RRU, un décompte de la période de temps de contention de canal au moment de début de la période de temps de contention de canal en fonction des informations d'indication de coopération.

5. Période selon la revendication 1, après la contention (S201), par une RRU, d'un canal cible, comprenant en outre :
la diffusion, par la RRU, d'informations de notification d'occupation après avoir obtenu avec succès le canal cible au moyen de la contention, dans lequel les informations de notification d'occupation sont utilisées pour indiquer que la RRU occupe avec succès le canal cible.

6. Procédé selon la revendication 5, dans lequel les informations de notification d'occupation sont des informations identifiables d'un dispositif de fidélité sans fil Wi-Fi.

7. Unité radio distante, RRU, comprenant au moins un processeur couplé à un support de stockage non transitoire stockant des instructions exécutables ; dans lequel les instructions exécutables, lorsqu'elles sont exécutées par le processeur, amènent le processeur à exécuter le procédé selon l'une quelconque des revendications 1 à 6.

8. Support de stockage lisible par ordinateur comprenant des instructions qui, lorsqu'elles sont exécutées par un ordinateur, amènent l'ordinateur à mettre en œuvre le procédé selon l'une quelconque des revendications 1 à 6.
